# EUROPEAN PATENT APPLICATION

(11) **EP 2 700 617 A1**
(43) Date of publication of application: **26.02.2014**
(21) Application number: 13275193.4
(22) Date of filing: 23.08.2013
(51) Int. Cl.: C02F 1/461

(54) **A fluid treatment device**

(30) Priority: 24.08.2012 GB 201215183
(71) Applicant: Sentinel Performance Solutions Ltd, Runcorn Cheshire WA7 4QX (GB)
(72) Inventor: Hancock, Graham, Runcorn, Cheshire WA7 4QX (GB); Day, Paul, Runcorn, Cheshire WA7 4QX (GB); Walker, Mark, Runcorn, Cheshire WA7 4QX (GB)
(74) Representative: Wilson Gunn

(57) **Abstract**

The invention comprises an electrolytic scale inhibitor (100) comprising: an inlet (101); an outlet (102); a chamber disposed between the inlet (101) and outlet (102) through which a fluid can flow; a first conductor formed from a first material; a second conductor formed from a second, different material with a lower standard electrode potential than the first material; and an electrical link between the first and second conductors, wherein when the chamber is full of fluid, the first and second conductors are each in contact with said fluid and wherein the link between the first and second conductors is provided with a monitoring means that is operable to determine a component of the electrochemically generated current flowing therethrough that arises from the difference in the standard electrode potentials of the first and second materials and to output a signal indicative thereof. Also proposed is a method of determining whether an electrolytic scale inhibitor is functioning adequately.

## Description

The present invention relates to an electrolytic scale inhibitor.

It is well known that, particularly in hard water areas, scale can cause a problem in water carrying systems. Salts held in solution in the water, particularly calcium and magnesium salts, can cause scale to form, particularly when the temperature of the water changes. For example, as the temperature of water changes insoluble calcium carbonate (calcite) crystals may form. This scale can adhere to the inside surfaces of the water carrying system, eventually causing blockages and/or reducing the efficiency of heating elements. Therefore it is desirable to treat the water so as to eliminate, or substantially reduce, the production of scale and/or to prevent scale from adhering to the inside surfaces of water carrying systems.

One known device for treating water is an electrolytic scale inhibitor. This comprises an elongate, tubular device with and inlet at one end and an outlet at the opposite end. The device comprises an outer copper tube and an inner zinc tube; the zinc tube is held, concentrically, inside the copper tube by an insulating material and the two tubes are electrically connected via a metal pin. When water with free moving charge carriers flows through the device it provides another connection between the zinc and copper tubes, completing a circuit. The two tubes have different standard electrode potentials and, since zinc is more easily oxidised than copper, the zinc tube forms an anode and zinc ions are released into the water. As scale starts to form, the presence of zinc ions alters the structure of the salt crystals so that they form small needle like, non-adherent crystals (aragonite). Over time, the zinc anode will degrade and a surface barrier can build up on the anode reducing its ability to corrode further. Therefore, the device must be replaced in order for treatment of the water to continue but the period of time during which the device is strongly dependent on the type of water flowing therethrough and therefore it can vary significantly depending on its geographical location.

Another known device is disclosed in GB2405644B. This discloses a device which is similar to that discussed above, however, the copper and zinc are connected via an electrical supply means. Therefore, rather than a pure electrochemical process, this device implements a driven, electrolytic process. The electrical supply means is operable to maintain the electrical current substantially at a pre-selected level so as to provide a substantially consistent level of water treatment over time. However, this device is necessarily rather bulky and expensive to produce.

It is an object of embodiments of the present invention to provide an alternative device that addresses the above problems.

According to a first aspect of the present invention there is provided an electrolytic scale inhibitor comprising: an inlet; an outlet; a chamber disposed between the inlet and outlet through which a fluid can flow; a first conductor formed from a first material; a second conductor formed from a second, different material with a lower standard electrode potential than the first material; and an electrical link between the first and second conductors, wherein when the chamber is full of fluid, the first and second conductors are each in contact with said fluid and wherein the link between the first and second conductors is provided with a monitoring means that is operable to determine a component of current flowing therethrough that arises from the difference in the standard electrode potentials of the first and second materials and to output a signal indicative thereof.

The first conductor acts as a cathode, the second conductor acts as an anode and, as water flows through the chamber, ions of the second material are passed into the water flow. Advantageously, such an arrangement provides the functionality of prior art electrolytic scale inhibitors whilst allowing one to monitor the status of the second conductor. By monitoring the signal output by the monitoring means, one can identify when the electrolytic scale inhibitor is no longer functioning correctly as the second conductor degrades and/or becomes fouled. Furthermore, whilst the monitoring means therefore allows a user to determine when the device needs to be replaced, it is a pure electrochemical process rather than a driven, electrolytic process and is therefore relatively simple and cheap to manufacture.

Preferably, the second material comprises a metal whose ions will, if present, alter the structure of salt crystals as they form in the fluid so that they form crystals which are less-adherent. Advantageously, this reduces the quantity of salt deposits (scale) which adhere to pipework downstream of the electrolytic scale inhibitor.

The first material may have a positive standard electrode potential and the second material may have a negative standard electrode potential. In one preferred embodiment, the second material comprises zinc. The first material may comprise copper.

The electrolytic scale inhibitor may comprise one or more additional conductors. Preferably, when the chamber is full of fluid the or each additional conductor is in contact with said fluid. For such embodiments, wherein the electrolytic scale inhibitor comprises three or more conductors, an electrical link may be provided between any pair of said conductors. The links between said pairs of conductors may be provided with a monitoring means that is operable to determine a component of current flowing therethrough that arises from the difference in the standard electrode potentials of the materials from which the pair of conductors are formed and to output a signal indicative thereof.

Said additional conductors may, in use, act as additional cathodes for the electrolytic scale inhibitor. To this end, one or more additional conductors may be formed from a material with a higher standard electrode potential than the second material and an electrical link may be provided between each such additional conductor and the second conductor. For such embodiments, the additional conductors may be formed from the same material as the first material. Alternatively, the additional conductors may be formed from a different material to the first material.

Additionally or alternatively, the additional conductors may, in use, act as additional anodes for the electrolytic scale inhibitor.

In one embodiment of the present invention, the electrolytic scale inhibitor comprises a first conductor formed from copper, a second conductor formed from zinc and a third conductor formed from carbon. Electrical links are provided between the first and second conductor and the second and third conductor .In use, the second conductor acts as a single zinc anode and the first and third conductors act as two cathodes.

The first, second and additional conductors may be of any suitable size and shape and may be arranged in any configuration as desired or required. In one embodiment, For example, the first and second conductors may be elongate and generally cylindrical. The first and second conductors may be disposed concentrically. The first conductor may be larger than the second conductor and may form an outer wall of the chamber. The first and second conductors may be connected via an insulating material. This allows the relative position of the two conductors to be maintained without providing additional conductive paths there between.

The inlet and/or outlet may be provided with an engagement means. This allows the inlet and outlet to be connected to a suitable source and sink. For example, the electrolytic scale inhibitor may be connected in-line in a mains supply to a building. This allows water to be treated as it enters the building and therefore offers protection to all plumbing within the building. Said engagement means may comprise a substantially cylindrical threaded section. The engagement means may be suitable for making a compression joint with a pipe and may further comprise an olive and a threaded nut arranged to cooperate with the threaded section.

The electrolytic scale inhibitor may further comprise an indicator means, which may be operable to output one or more indicator signal. Said indicator signals may be output periodically or substantially continuously. Said indicator signals may be qualitative and/or quantitative. The indicator means may be operable to output a first indicator signal when the electrolytic scale inhibitor is functioning correctly and a second indicator signal when it is not functioning correctly. The electrolytic scale inhibitor may be deemed not to be functioning correctly if the component of current satisfies pre-determined criteria. For embodiments comprising further conductors, the electrolytic scale inhibitor may be deemed not to be functioning correctly if the component of current in one or more of the links between pairs of conductors satisfies pre-determined criteria. Such criteria may be that the current(s) is/are below a threshold level. Additionally or alternatively, the indicator signal may indicate the magnitude of the component of current flowing through the link between the first and second conductors that arises from the difference in the standard electrode potentials of the first and second materials. The indicator signal may indicate, qualitatively or quantitatively, the magnitude of the component of current flowing through the link between the first and second conductors that arises from the difference in the standard electrode potentials of the first and second materials. For embodiments comprising further conductors, the indicator signal may indicate, qualitatively or quantitatively, the magnitude of the component of current flowing through each electrical link between pairs of conductors that arises from the difference in the standard electrode potentials of the materials of each of the pair of conductors. The indicator signal may indicate when the current flowing through the link is above a predetermined level or threshold.

The indicator means may be operable to output audio and/or visual indicator signals. Said audio signals may take any suitable form. The indicator means may comprise a display screen operable to output visual indicator signals. Said display screen may comprise an LED or LCD screen. Additionally or alternatively, the visual indicator signal may be affected by illuminating one or more LEDs.

In one embodiment, the indicator means is operable to output an indicator signal periodically. In the event that the electrolytic scale inhibitor is functioning correctly an LED will emit a flash of green light and when the electrolytic scale inhibitor is not functioning correctly an LED will emit a flash or red light. Advantageously, such an arrangement is simple, easy to interpret, low cost and does not require significant power to operate. By only pulsing the light from an LED, power consumption is kept low but by keeping the time period between flashes relatively small, one can quickly ascertain the status of the second conductor. The time period may be of the order of seconds, say 32 seconds.

The electrolytic scale inhibitor may comprise a processing means. Said processing means may be operable to receive the signal output by the monitoring means and to control the indictor means in response thereto. The processing means may comprise a microprocessor. The processing means may be programmable. This may allow a user to customise the electrolytic scale inhibitor. For instance, a programmable processing means may a user to alter the time period between LED flashes.

The electrolytic scale inhibitor may comprise a user interface. Said user interface may comprise one or more user actuable controls. Said controls may comprise, but are not limited to: buttons, dials, switches and touch screen devices. Advantageously, such a user interface allows a user to reprogram the processing means and/or alter the indicator means. For embodiments wherein the indicator means comprises a display screen, the user interface may allow a user to select one indicator signal from a plurality of such signals. This may be achieved by toggling through a plurality of such signals until the desired signal is displayed.

The electrolytic scale inhibitor may comprise a power supply. Said power supply may comprise a battery and/or an energy scavenging means. For embodiments comprising a battery, electrolytic scale inhibitor may comprise a means for accessing and replacing said battery. The energy scavenging means may be operable to recharge a battery using energy generated by the electrochemical process or by any other process, such as photovoltaic effects, as convenient.

According to a second aspect of the present invention there is provided a method of determining whether an electrolytic scale inhibitor is functioning adequately or whether it must be replaced,
said electrolytic scale inhibitor being of the type comprising: an inlet; an outlet; a chamber disposed between the inlet and outlet through which a fluid can flow; a first conductor formed from a first material; a second conductor formed from a second, different material with a lower standard electrode potential than the first material; and an electrical link between the first and second conductors and wherein when the chamber is full of fluid, the first and second conductors are each in contact with said fluid,
said method comprising the steps of: monitoring a component of current flowing through the link that arises from the difference in the standard electrode potentials of the first and second materials and outputting a signal indicating that the electrolytic scale inhibitor must be replaced if said monitored current satisfies pre-defined criteria and/or outputting a signal indicating that the electrolytic scale inhibitor is functioning correctly if the monitored current does not satisfy the pre-defined criteria.

The first conductor acts as a cathode, the second conductor acts as an anode and, as water flows through the chamber, ions of the second material are passed into the water flow. Advantageously, such a method allows one to monitor the status of the second conductor in an electrolytic scale inhibitor. The signal helps to identify when the electrolytic scale inhibitor is no longer functioning correctly as the second conductor degrades and/or becomes fouled.

The second aspect of the present invention may comprise any or all features of the first aspect of the present invention as desired or required.

The signal(s) may be output periodically or substantially continuously.

The signal(s) may comprise audible and/or visual signals.

The pre-determined criteria may be that the current is below a threshold level. The threshold level may be fixed or, alternatively, the method may allow a user to set the threshold level. The threshold level may be dependent on other factors, such as the concentration of salt ions in the fluid that flows through the electrolytic scale inhibitor. When the fluid comprises water, the threshold level may be dependent on the hardness of the water.

In order that the invention may be more clearly understood an embodiment thereof will now be described, by way of example only, with reference to the accompanying drawings, of which:
Fig. 1 is a cross sectional view of an electrolytic scale inhibitor according to the present invention;

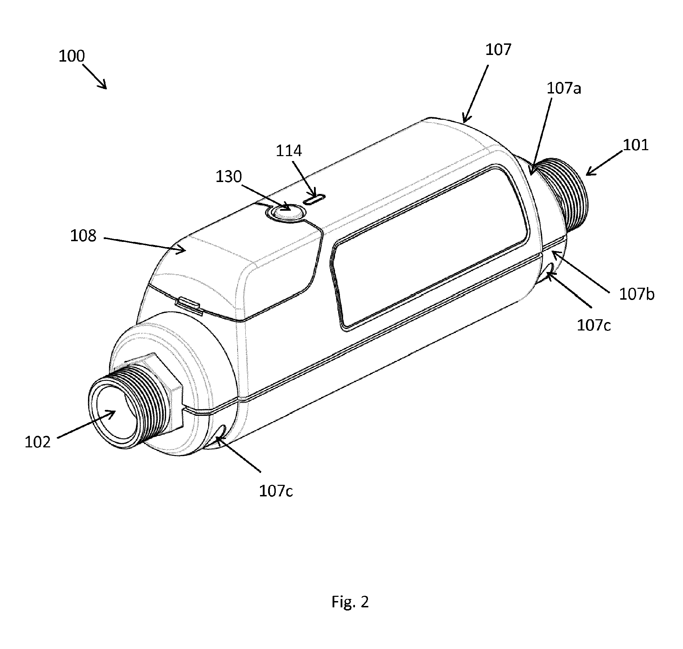

Fig. 2 is a perspective view of the electrolytic scale inhibitor shown in Fig. 1; and
Fig. 3 shows the gland assembly of the electrolytic scale inhibitor shown in Fig. 1 which allows electrical contact to be made with the inner second conductor.

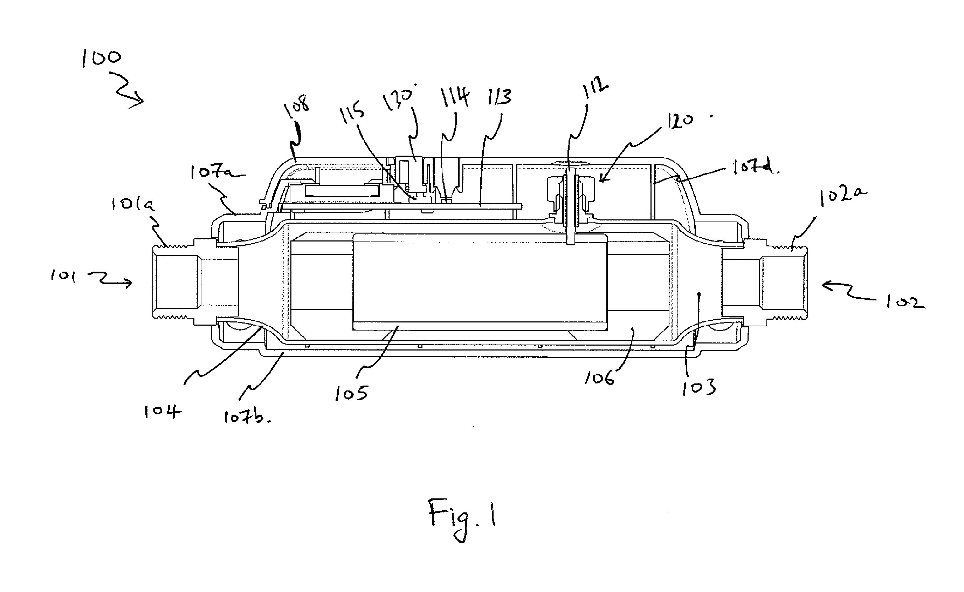

Referring to Fig. 1, an electrolytic scale inhibitor 100 according to the present invention comprises a first generally cylindrical conductor 104, which is open at both ends so as to form an inlet 101; an outlet 102; and a chamber 103 disposed there between. A second, smaller, generally cylindrical conductor 105, which is open at both ends, is mounted concentrically within the first conductor 104. The first conductor 104 is formed from copper and the second conductor 105 is formed from zinc. The first and second conductors 104, 105 are separated by insulating supports 106, which hold the second conductor 105 in fixed relationship with the first conductor 104. Said insulating supports may be formed from a plastics material. When the chamber 103 is full of water, the first and second conductors 104, 105 are each in contact with said water.

The inlet 101 and outlet 102 each comprise a substantially cylindrical threaded section 101a, 102a which are formed from brass. The substantially cylindrical threaded sections 101a, 102a are attached to the first conductor 104 by way of a brazed joint, or similar connection means, and are arranged so as to cooperate with an internally treaded nut and a soft olive (not shown) so as to form a standard compression joint with a pipe (not shown). This provides an engagement means allowing the inlet 101 and outlet 102 to be connected to a suitable source and sink. For example, the electrolytic scale inhibitor 100 may be connected in-line in a mains supply to a building. This allows water to be treated as it enters the building and therefore offers protection to all plumbing within the building.

The electrolytic scale inhibitor 100 further comprises an electrical link between the first and second conductors 104, 105.

In use, when water flows through the chamber 103, the first conductor 104 acts as a cathode, the second conductor 105 acts as an anode and zinc ions are passed into the water flow. Advantageously, the presence of zinc ions will alter the structure of salt crystals as they form in the water so that they form crystals which are less-adherent. Advantageously, this reduces the quantity of salt deposits (scale) which adhere to pipework downstream of the electrolytic scale inhibitor 100.

As will be described in further detail below, the link between the first and second conductors 104, 105 is provided with a monitoring means that is operable to determine a component of current flowing therethrough that arises from the difference in the standard electrode potentials of the materials from which the first and second conductors 104, 105 are formed, namely copper and zinc. The monitoring means is further operable and to output a signal indicative of said component of current.

More particularly, the link between the first and second conductors 104, 105 comprises a first conducting member 111 which is in contact with the first conductor 104 and a second conducting member 112 which is in contact with the second conductor 105.

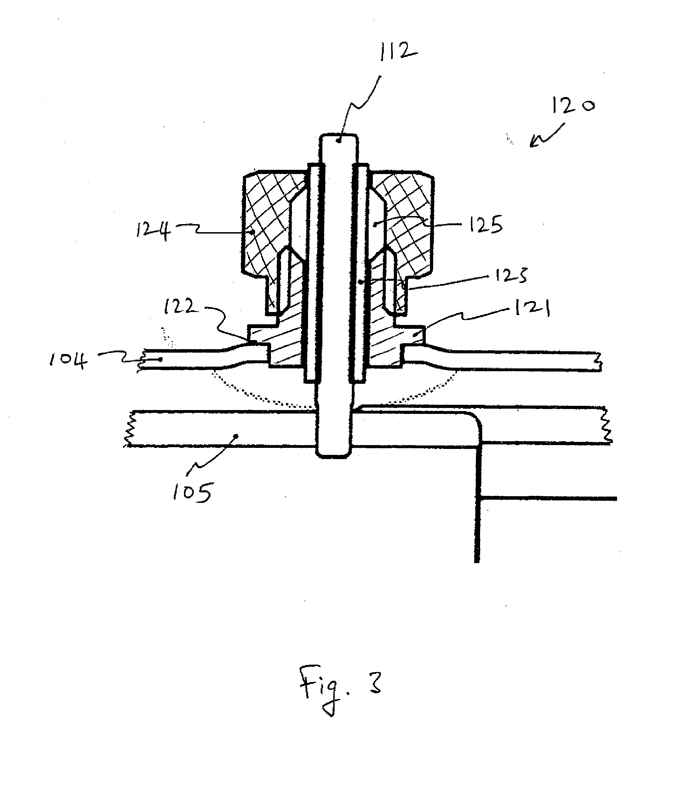

As shown in greater detail in Fig. 3, contact with the second conductor 105 is achieved by way of a gland assembly 120. Said gland assembly 120 comprises a gland body 121 which is connected to the first conductor 104 by way of a suitable water tight joint such as a brazed joint 122. The gland body 121 forms a generally cylindrical protrusion from the first conductor 104 in a direction that is generally perpendicular to the axis of said first conductor 104. This protrusion defines a cylindrical bore through which the substantially cylindrical second conducting member 112 passes. The second conducting member 112 is surrounded by an insulating material 123 and the combination of the second conducting member 112 and insulating material 123 is a tight fit into the cylindrical bore of the gland body 121.

The protrusion formed by the gland body 121 is provided with an externally threaded section which is operable to engage with a gland nut 124. A compressible packing material, such as a plastic olive 125, is disposed between the gland body 121 and the gland nut 124 so that as the gland nut 124 is tightened, said compressible material forms a water tight seal.

This water tight arrangement allows for an electrical connection to be made to the inner second conductor 105 without compromising the integrity of the chamber 103, even at typical operating pressures of around 4 to 5 bar, or even 1 to 8 bar.

The link further comprises a current monitoring means which is connected across the first and second conducting members 111, 112. Said current monitoring means is mounted on a printed circuit board 113. The printed circuit board 113 is connected to the first conducting member 111 via wire 111a and to the second conducting member 112 via wire 112a. The printed circuit board 113 further comprises a microprocessor, one or more LEDs 114 and a battery. In the present embodiment, the printed circuit board 113 comprises a single LED which is operable to output red or green light. Alternatively, the printed circuit board may comprise a red LED and a green LED. The microprocessor is operable to receive a signal from the current monitoring means indicative of the current which flows from the first conductor 104 to the second conductor 105. The microprocessor is further operable to compare said current to a threshold level and to control the illumination of the one or more LEDs 114.

In particular, the processing means is operable to compare said current to a threshold level periodically, say 32 seconds. In the event that the current exceeds the threshold level, the electrolytic scale inhibitor 100 is functioning correctly and the processing means causes the LED 114 to emit a flash of green light. Otherwise, the electrolytic scale inhibitor 100 is not functioning correctly and the processing means may cause the LED 114 to emit a flash of red light. Advantageously, such an arrangement is simple, easy to interpret, low cost and does not require significant power to operate. By only pulsing the light from the LED 114, power consumption is kept low but by keeping the time period between flashes relatively small, one can quickly ascertain the status of the second conductor 105.

The electrolytic scale inhibitor 100 further comprises a push button 130. When said push button 130 is compressed it actuates a switch 115 which prompts the processing means to compare the current monitored by the current monitoring means to the threshold level. In the event that the current exceeds the threshold level, electrolytic scale inhibitor 100 is functioning correctly and the processing means causes the LED 114 to emit a flash of green light. Otherwise, the electrolytic scale inhibitor 100 is not functioning correctly and the processing means may cause the LED 114 to emit a flash of red light.

The electrolytic scale inhibitor 100 is provided with a housing 107. Said housing 107 is formed in two mutually engaging sections 107a, 107b. Mutual engagement between the two sections 107a, 107b is achieved by way of machine screws (not shown) which pass though bores 107c in the second section 107b and cooperate with corresponding threaded bores (not shown) in the first section 107a. Internal projections 107d ensure that the housing engages with the first conductor 104. The two sections 107a, 107b of the housing 107 may each be formed from a plastics material by injection moulding or otherwise.

The first section 107a of the housing 107 comprises a removable panel 108, which provides access to the printed circuit board 113 for routine maintenance procedures such as changing the battery.

Such an arrangement 100 provides the functionality of prior art electrolytic scale inhibitors whilst allowing one to monitor the status of the second conductor 105. By monitoring the signal output by the monitoring means, one can identify when the electrolytic scale inhibitor is no longer functioning correctly as the second conductor 105 degrades and/or becomes fouled. Furthermore, whilst the monitoring means therefore allows a user to determine when the device needs to be replaced, it is a pure electrochemical process rather than a driven, electrolytic process and is therefore relatively simple and cheap to manufacture.

The above embodiment is described by way of example only. Many variations are possible without departing from the scope of the invention as defined in the appended claims.

## Claims

1. An electrolytic scale inhibitor comprising: an inlet; an outlet; a chamber disposed between the inlet and outlet through which a fluid can flow; a first conductor formed from a first material; a second conductor formed from a second, different material with a lower standard electrode potential than the first material; and an electrical link between the first and second conductors, wherein when the chamber is full of fluid, the first and second conductors are each in contact with said fluid and wherein the link between the first and second conductors is provided with a monitoring means that is operable to determine a component of the electrochemically generated current flowing therethrough that arises from the difference in the standard electrode potentials of the first and second materials and to output a signal indicative thereof.

2. An electrolytic scale inhibitor as claimed in claim 1 wherein the second material comprises a metal whose ions will, if present, alter the structure of salt crystals as they form in the fluid so that they form crystals which are less-adherent.

3. An electrolytic scale inhibitor as claimed in claim 1 or claim 2 wherein the second material comprises zinc.

4. An electrolytic scale inhibitor as claimed in any preceding claim wherein the first material comprises copper.

5. An electrolytic scale inhibitor as claimed in any preceding claim further comprising one or more additional conductors.

6. An electrolytic scale inhibitor as claimed in claim 5 wherein an electrical link is provided between two or more pairs of conductors and the electrical links between pairs of conductors are provided with a monitoring means that is operable to determine a component of current flowing therethrough that arises from the difference in the standard electrode potentials of the materials from which the pair of conductors are formed and to output a signal indicative thereof.

7. An electrolytic scale inhibitor as claimed in any one of claims 5 or 6 wherein, in use, the one or more additional conductors act as additional cathodes for the electrolytic scale inhibitor.

8. An electrolytic scale inhibitor as claimed in any one of claims 5 to 7 wherein the electrolytic scale inhibitor comprises a first conductor formed from copper, a second conductor formed from zinc and a third conductor formed from carbon.

9. An electrolytic scale inhibitor as claimed in any preceding claim wherein the first and second conductors are generally cylindrical and are disposed concentrically.

10. An electrolytic scale inhibitor as claimed in any preceding claim further comprising an indicator means, which is operable to output a first indicator signal when the electrolytic scale inhibitor is functioning correctly and a second indicator signal when it is not functioning correctly.

11. An electrolytic scale inhibitor as claimed in claim 10 wherein the indicator signal indicates the magnitude of the component of current flowing through the link between the first and second conductors that arises from the difference in the standard electrode potentials of the first and second materials.

12. An electrolytic scale inhibitor as claimed in any preceding claim further comprising a power supply comprising a battery and/or an energy scavenging means.

13. An electrolytic scale inhibitor as claimed in claim 12 wherein the energy scavenging means is operable to recharge a battery using energy generated by the electrochemical process.

14. A method of determining whether an electrolytic scale inhibitor is functioning adequately or whether it must be replaced, said electrolytic scale inhibitor being of the type comprising: an inlet; an outlet; a chamber disposed between the inlet and outlet through which a fluid can flow; a first conductor formed from a first material; a second conductor formed from a second, different material with a lower standard electrode potential than the first material; and an electrical link between the first and second conductors and wherein when the chamber is full of fluid, the first and second conductors are each in contact with said fluid, said method comprising the steps of: monitoring a component of the electrochemically generated current flowing through the link that arises from the difference in the standard electrode potentials of the first and second materials and outputting a signal indicating that the electrolytic scale inhibitor must be replaced if said monitored current satisfies pre-defined criteria and/or outputting a signal indicating that the electrolytic scale inhibitor is functioning correctly if the monitored current does not satisfy the pre-defined criteria.

15. A method as claimed in claim 14 wherein the electrolytic scale inhibitor comprises an electrolytic scale inhibitor as claimed in any one of claims 1 to 13.

16. A method as claimed in claim 14 or claim 15 wherein the pre-determined criteria are that the current is below a threshold level and the threshold level is dependent on the concentration of salt ions in the fluid that flows through the electrolytic scale inhibitor.
